(19) **Europäisches Patentamt**
**European Patent Office**
**Office européen des brevets**

(11) **EP 3 121 673 A1**

(12) **EUROPÄISCHE PATENTANMELDUNG**

(43) Veröffentlichungstag:
**25.01.2017  Patentblatt 2017/04**

(51) Int Cl.:
**G05B 23/02** (2006.01)

(21) Anmeldenummer: **16179950.7**

(22) Anmeldetag: **18.07.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **20.07.2015  DE 102015213582**

(71) Anmelder: **Siemens Aktiengesellschaft**
**80333 München (DE)**

(72) Erfinder:
- **Höfig, Kai**
  **80797 München (DE)**
- **Zeller, Marc**
  **81243 München (DE)**

(54) **VERFAHREN ZUR MODELLIERUNG EINES FEHLERPROPAGATIONSMODELLS UND COMPUTERPROGRAMMPRODUKT**

(57)    Bei dem Verfahren zur Modellierung eines Fehlerpropagationsmodells eines mehrere Komponenten umfassenden Systems werden eine oder mehrere Schnittstellen, mittels welchen die mehreren Komponenten miteinander in Signalverbindung stehen, herangezogen und es wird zumindest einer oder mehreren der Schnittstellen jeweils ein Fehlermodus zugeordnet, welcher in die Modellierung des Fehlerpropagationsmodells einbezogen wird.

Das Computerprogrammprodukt ist ausgebildet, ein Modell eines Systems mit mehreren Komponenten, welche mittels einer oder mehrerer Schnittstellen miteinander in Signalverbindung stehen, entgegenzunehmen und anhand eines Verfahrens nach einem der vorhergehenden Ansprüche ein Fehlerpropagationsmodell des Systems bereitzustellen.

FIG 2

EP 3 121 673 A1

**Beschreibung**

Die Erfindung betrifft ein Verfahren zur Modellierung eines Fehlerpropagationsmodells eines mehrere Komponenten umfassenden Systems sowie ein Computerprogrammprodukt.

Eingebettete Systeme haben in verschiedenste Anwendungsbereiche Eingang gefunden, etwa in die Industrie-Automation, in medizinische Geräte oder Transportsysteme. Diese Systeme beinhalten oft sicherheitsrelevante Funktionen, d.h. die Systeme müssen gegen unbeabsichtigte Ausfälle besonders gesichert sein. Fehler innerhalb dieser Systeme haben häufig gravierende Konsequenzen. Folglich muss während der Entwicklung solcher Systeme die Systemsicherheit durchgängig berücksichtigt werden. Häufig aber können Sicherheitsanalysen von Systemen erst am Schluss des Entwicklungsprozesses dieser Systeme berücksichtigt werden, da solche Sicherheitsanalysen typischerweise zeitaufwändig sind.

Eine durchgängige Durchführung und Berücksichtigung von Sicherheitsanalysen ist zudem durch den Umstand erschwert, dass Sicherheitsanalysen durch Sicherheitsingenieure durchgeführt werden, während die Systementwicklung durch Entwicklungsingenieure erfolgt. Systementwicklung und Systemsicherheit betreffen also sehr verschiedene fachliche Gebiete, zwischen welchen eine inhaltliche Vermittlung und Abstimmung in der Praxis nicht immer einfach zu realisieren ist.

Vor diesem Hintergrund gestalten sich sicherheitskritische Systementwicklungsprojekte insbesondere aufgrund der wachsenden Komplexität von eingebetteten Systemen höchst anspruchsvoll.

Es ist daher Aufgabe der Erfindung, ein Verfahren bereitzustellen, mittels welchem eine zeitnahe Durchführung und Berücksichtigung von Sicherheitsanalysen bei der Systementwicklung einfacher erfolgen kann. Insbesondere sollen ein zeitnaher Austausch und ein iterativer Prozess von Systementwicklung und Systemanalyse möglich sein. Ferner ist es Aufgabe der Erfindung, ein entsprechendes Computerprogrammprodukt bereitzustellen, welches die Berücksichtigung von Systemanalysen unterstützt.

Diese Aufgabe wird mit einem Verfahren zur Modellierung eines Fehlerpropagationsmodells eines mehrere Komponenten umfassenden Systems mit den in Anspruch 1 angegebenen Merkmalen sowie mit einem Computerprogrammprodukt mit den in Anspruch 9 angegebenen Merkmalen und mit einem Verfahren zur Entwicklung eines mehrere Komponenten umfassenden technischen Systems mit den in Anspruch 10 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist ein Verfahren zur Modellierung eines Fehlerpropagationsmodells eines mehrere Komponenten umfassenden Systems. Bei dem erfindungsgemäßen Verfahren werden eine oder mehrere Schnittstellen, mittels welchen die mehreren Komponenten miteinander in Signalverbindung stehen, herangezogen und es wird zumindest einer oder jeweils mehreren der Schnittstellen ein Fehlermodus zugeordnet, welcher in die Modellierung des Fehlerpropagationsmodells einbezogen wird. Auf diese Weise kann die Architektur des mehrkomponentigen Systems als solche herangezogen werden, um bereits wesentliche Rahmenbedingen des Fehlerpropagationsmodells festzulegen. Insbesondere ist aufgrund der sowohl bei der Systemarchitektur als auch beim Entwurf des Fehlerpropagationsmodells bedeutsamen Schnittstellen ein verbindendes Element vorhanden, welches zwischen Systemarchitektur und Fehlerpropagationsmodell vermittelt und somit eine Zusammenarbeit von Sicherheitsingenieuren und Systemarchitekten erheblich erleichtert. Dies ermöglicht insbesondere eine zeitnahe und mit dem Systementwurf iterativ durchführbare Sicherheitsanalyse des mehrkomponentigen Systems.

Es versteht sich, dass es sich bei dem System, dessen Fehlerpropagationsmodell erfindungsgemäß modelliert wird, stets um ein technisches System handelt, insbesondere um ein Industrie-Automationssystem, ein medizinisches Gerätesystem oder ein Transportsystem.

Erfindungsgemäß können aufgrund der Verknüpfung von Systemarchitektur und Fehlerpropagationsmodell sowohl Systemingenieure als auch Sicherheitsingenieure mit den Begriffen, Vorgehensweisen und Werkzeugen arbeiten, die jeweils in Ihrem eigenen Fachgebiet gewöhnlich Verwendung finden. Da das erfindungsgemäße Verfahren als Systemarchitektur und Fehlerpropagationsmodell verbindendes Element die Kenntnis der die Komponenten des Systems verbindenden Schnittstellen voraussetzt, können die Systemkomponenten während des Entwicklungs- und Sicherheitsanalyse-Prozesses einfach ausgetauscht, ergänzt oder entfernt werden, indem ggf. Schnittstellen geändert, ggf. neue Schnittstellen einbezogen werden und ggf. obsolet gewordene Schnittstellen nicht weiter berücksichtigt werden. Auch können sicherheitsrelevante Informationen oder neue Informationen über das Systemmodell ergänzt werden ohne dass bereits bestehende Teile des Sicherheitsanalysemodells neu erarbeitet werden müssen, d.h. entsprechende Anpassungen sind minimalinvasiv.

Das mittels des erfindungsgemäßen Verfahrens entworfene Fehlerpropagationsmodell nutzt vorteilhaft die Systemarchitektur. Mittels dieser Kenntnis können auf der Basis der Systemarchitektur des Systemmodells bereits in frühen Entwicklungsphasen Sicherheitsanalysen durchgeführt werden. Die Ergebnisse der Sicherheitsanalyse sind erfindungsgemäß stets mit dem Systemmodell konsistent und können ihrerseits genutzt werden um das Systemmodell während des Entwicklungsprozesses zu ändern oder anzupassen.

In einer vorteilhaften Weiterbildung des erfindungsgemäßen Verfahrens umfasst das Fehlerpropagationsmodell einen Fehlerbaum. In dieser Weiterbildung des erfindungsgemäßen Verfahrens bildet das Fehlerpropagationsmodell die Fehlerpropagation besonders übersichtlich und transparent ab. Alternativ oder zusätzlich umfasst das Fehlerpropagationsmodell eine Markovkette (engl.: "Markov chain").

Vorteilhaft umfasst bei dem erfindungsgemäßen Verfahren das Fehlerpropagationsmodell zumindest ein Komponentenfehlerpropagationsmodell für zumindest eine Komponente des Systems. In zweckmäßiger Weiterbildung umfasst bei dem erfindungsgemäßen Verfahren das Komponentenfehlerpropagationsmodell zumindest einen Komponentenfehlerbaum. Alternativ oder zusätzlich und ebenfalls bevorzugt umfasst bei dem erfindungsgemäßen Verfahren das Komponentenfehlerpropatationsmodell zumindest eine Markovkette.

Bei dem Verfahren gemäß der Erfindung ist in einer bevorzugten Weiterbildung zumindest eine der Schnittstellen eine Eingangsschnittstelle der zumindest einen Komponente und das Komponentenfehlerpropagationsmodell dieser Komponente weist eine logische UND-Verknüpfung eines über diese Eingangsschnittstelle führenden Signalpfades sowie eines weiteren Ereignisses auf. Alternativ oder zusätzlich ist in einer bevorzugten Weiterbildung des erfindungsgemäßen Verfahrens zumindest eine der Schnittstellen eine Eingangsschnittstelle der zumindest einen Komponente und das Komponentenfehlerpropagationsmodell dieser Komponente weist eine logische ODER-Verknüpfung eines über diese Eingangsschnittstelle führenden Signalpfades sowie eines weiteren Ereignisses auf. Besonders bevorzugt resultiert aus oder mit den logischen Verknüpfungen wie in den Weiterbildungen zuvor beschrieben jeweils ein Ausgangsfehlermodus der Komponente.

Bevorzugt wird das erfindungsgemäße Verfahren für mehrere, insbesondere sämtliche, Komponenten des Systems durchgeführt. Auf diese Weise ist der Bezug von Fehlerpropagationsmodell und Systemarchitektur für das gesamte System durchgängig transparent.

Vorzugsweise werden bei dem erfindungsgemäßen Verfahren sämtliche Schnittstellen, mittels welchen die mehreren Komponenten miteinander in Verbindung stehen, herangezogen und es wird jeder dieser Schnittstellen ein Fehlermodus zugeordnet.

Vorteilhaft wird das erfindungsgemäße Verfahren zur Modellierung eines Fehlerpropagationsmodells durchgeführt und anhand des Fehlerpropagationsmodells eine Sicherheitsanalyse des technischen Systems durchgeführt.

Das erfindungsgemäße Computerprogrammprodukt ist ausgebildet, ein Modell eines Systems mit mehreren Komponenten, welche mittels einer oder mehrerer Schnittstellen miteinander in Signalverbindung stehen, entgegenzunehmen und anhand eines Verfahrens nach einem der vorhergehenden Ansprüche ein Fehlerpropagationsmodell des Systems bereitzustellen.

Bei dem erfindungsgemäßen Verfahren zur Entwicklung eines mehrere Komponenten umfassenden technischen Systems wird ein Verfahren zur Modellierung eines Fehlerpropagationsmodells des mehrere Komponenten umfassenden technischen Systems wie vorhergehend beschrieben oder ein Computerprogrammprodukt wie zuvor beschrieben herangezogen.

Auf diese Weise kann/können bei der Entwicklung des technischen Systems, insbesondere beim Systementwurf und/oder zeitnah und/oder mit der Entwicklung iterativ, eine Sicherheitsanalyse oder schrittweise angepasst mehrere Sicherheitsanalysen, des technischen Systems durchgeführt werden.

Nachfolgend wird die Erfindung anhand eines in der Zeichnung dargestellten Ausführungsbeispiels näher erläutert. Es zeigen:

Fig. 1    ein Systemmodell eines Systems mit mehreren Komponenten schematisch in einer Prinzipskizze sowie

Fig. 2    ein Sicherheitsanalysemodell zum System des Systemmodells gem. Fig. 1 schematisch in einer Prinzipskizze.

Um auf Basis eines Systemmodells und iterativ eine Sicherheitsanalyse für eingebettete Systeme zu ermöglichen, wird für das nachfolgend im Einzelnen beschriebene Ausführungsbeispiel ein Dachmodell herangezogen. In diesem Dachmodell sind Systemmodell und das mittels des (nachfolgend noch näher im Einzelnen beschriebenen) erfindungsgemäßen Verfahrens erhaltene Sicherheitsanalysemodell in Gestalt eines Fehlerpropagationsmodells mit engem Bezug zueinander zugleich enthalten. Gewissermaßen dient ein solches Dachmodell als verbindende Klammer des Sicherheitsanalysemodells und der Systemarchitektur. Dieses Dachmodell, hier "System Safety Analysis Model" (im folgenden auch gelegentlich kurz S²AM) genannt, vereint das Systemmodell (SM) (wie beispielsweise definiert in SysML, MARTE or EAST-ADL) sowie das Sicherheitsanalysemodell (Safety Analysis Model (SAM) (wie beispielsweise definiert in FEMA, Fault Tree or Markov chain)):

$$S^2AM \supset \{SM \cup SAM \mid SM \cap SAM = \emptyset\}$$

mit

$$SM = (C, P, \mathrm{CON})$$

und

$$SAM = (E, \mathrm{FM}, \beta).$$

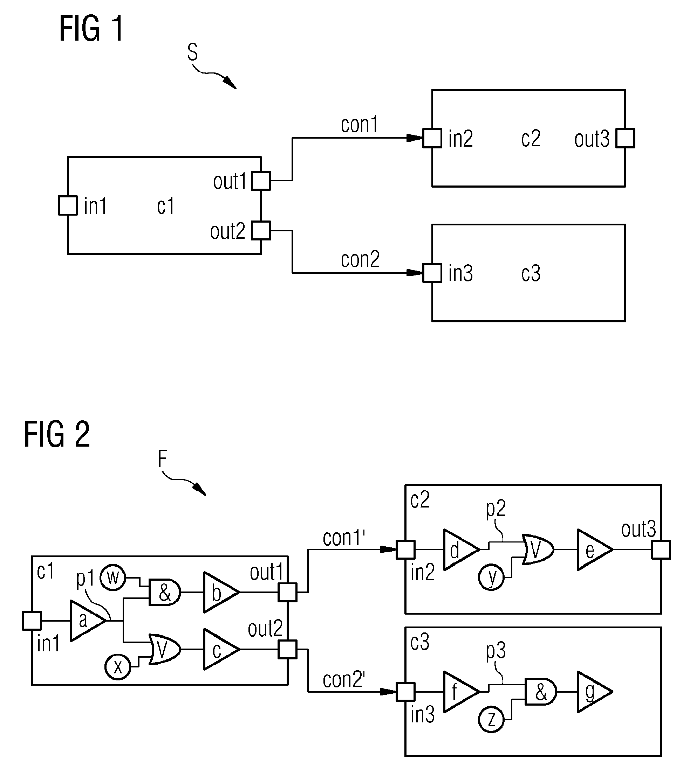

SM ist ein Tupel, welches einen Satz von Komponenten $C = \{c_1, ..., c_n\}$ und einen Satz von Schnittstellen $P = \{P^{\mathrm{In}} \cup P^{\mathrm{Out}} \mid P^{\mathrm{In}} \cap P^{\mathrm{Out}} = \emptyset\}$ aufweist, wobei $P^{\mathrm{In}}$ Eingangsschnittstellen und $P^{\mathrm{Out}}$ Ausgangsschnittstellen bezeichnen. Das Sicherheitsanalysemodell wird dabei wie nachfolgend beschrieben als erfindungsgemäß modelliertes Fehlerpropagationsmodell F (s. Fig. 2) erhalten. Erfindungsgemäß werden hierzu die vorgenannten Schnittstellen $P$ des Systems S herangezogen. Jede Schnittstelle ist bestimmten Komponenten zugeordnet ($\rho: P \rightarrow C$). CON ist ein Satz gerichteter Signalflussverbindungen zwischen Komponenten des technischen Systems, genauer, deren jeweilige Schnittstellen (CON $\subseteq P^0 \times P^l$).

Für das in Fig. 1 gezeigte mehrkomponentige System S gilt für das Systemmodell $SM_{Ex}$:

$$SM_{Ex} = (\{c1, c2, c3\}, \{\mathrm{in}1, \mathrm{in}2, \mathrm{in}3, \mathrm{out}1, \mathrm{out}2, \mathrm{out}3\}, \{\mathrm{con}1, \mathrm{con}2\})$$

mit

$$\rho(\mathrm{in}1) = c1, \rho(\mathrm{in}2) = c2, \rho(\mathrm{in}3) = c3,$$

$$\rho(\mathrm{out}1) = c1, \rho(\mathrm{out}2) = c1, \rho(\mathrm{out}3) = c2,$$

$$\mathrm{con}1 = (\mathrm{out}1, \mathrm{in}2), \mathrm{con}2 = (\mathrm{out}2, \mathrm{in}3).$$

Das Sicherheitsanalysemodell dieses Systems ist ein Tupel mit einem Satz von Ereignissen $E = \{e_1, ..., e_r\}$ (auch als Ursachen bezeichnet) und mit einem Satz von Fehlermodi

$$FM = \{\mathrm{FM}^{\mathrm{In}} \cup \mathrm{FM}^{\mathrm{Out}} \mid \mathrm{FM}^{\mathrm{In}} \cap \mathrm{FM}^{\mathrm{Out}} = \emptyset\},$$

wobei $\mathrm{FM}^{\mathrm{In}}$ einen Satz von Eingangsfehlermodi und $\mathrm{FM}^{\mathrm{Out}}$ einen Satz von Ausgangsfehlermodi bezeichnen. Zudem beschreibt die Funktion $\beta: E \cup \mathrm{FM}^{\mathrm{In}} \rightarrow \mathrm{FM}^{\mathrm{Out}}$ die Beziehung zwischen Eingangsfehlermodi oder Ereignissen und Ausgangsfehlermodi mittels der Bool'schen Operatoren $\wedge$, $\vee$, $\rightharpoondown$ .

Vorliegend wird ein Sicherheitsanalysemodell in Gestalt jeweils eines Komponentenfehlerpropagationsmodells für sämtliche Komponenten $c_i$ des mehrkomponentigen Systems definiert:

$$c_i \in C: SAM_{c_i} = (E_{c_i}, \mathrm{FM}_{c_i}, \beta_{c_i}).$$

Hinsichtlich der Bezeichnung sei zur Klarstellung bemerkt, dass im Rahmen der nachfolgenden Beschreibung und der Zeichnung bei der Bezeichnung der Komponente "$c$" der Index "$i$" oder "1", "2", oder "3" etc. nicht notwendigerweise tief gestellt sein muss. Vielmehr kann der Index stets auch ohne Tiefstellung angefügt sein.

Basierend auf dem Informationsfluss über die Schnittstellen $P^{\mathrm{In}}$, $P^{\mathrm{Out}}$ erfolgt erfindungsgemäß eine Verknüpfung der Fehlerpropagation zur Systemarchitektur, indem Fehlermodi des Fehlerpropagationsmodells auf die Schnittstellen des Systemmodels abgebildet werden:

$$\gamma_{\text{in}}: \text{FM}^{\text{In}} \to P^{\text{In}}$$

und

$$\gamma_{\text{out}}: \text{FM}^{\text{Out}} \to P^{\text{Out}}.$$

Somit erlauben die Kommunikationsverbindungen CON' innerhalb des Systems die Beschreibung der Fehlerpropagation zwischen den verschiedenen Komponenten:

$$\text{CON}' \subseteq \text{FM}^{\text{Out}} \times \text{FM}^{\text{In}} = \gamma_{out}(\text{FM}^{\text{Out}}) \times \gamma_{in}(\text{FM}^{\text{In}}).$$

Folglich ist es mittels des erfindungsgemäßen Verfahrens ermöglicht, die Beschreibung der Sicherheitsanalyse passgenau zum Systemmodell des mehrkomponentigen Systems zu unternehmen.

Ein erfindungsgemäß modelliertes Fehlerpropagationsmodell in Gestalt eines Systemfehlerbaums, welcher aus einzelnen Komponentenfehlerbäumen (engl. "Component Fault Tree" (CFT)) zur Analyse einzelner Komponenten $c_i$ des Systemmodells $\text{SM}_{\text{Ex}}$ zusammengesetzt ist, in Fig. 2 dargestellt mit

$$\text{SAM}_{\text{Ex}} = \{\text{SAM}_{c1} \cup \text{SAM}_{c1} \cup \text{SAM}_{c2}\}$$

mit

$$\text{SAM}_{c1} = (\{w, x\}, \{a, b, c\}, \{a \wedge w = b, a \vee x = c\})$$
$$\text{SAM}_{c2} = (\{y\}, \{d, e\}, \{d \vee y = e\})$$
$$\text{SAM}_{c3} = (\{z\}, \{f, g\}, \{f \wedge z = g\})$$

und

$$\gamma(a) = \text{in1}, \gamma_{in}(d) = \text{in2}, \gamma_{\text{in}}(f) = \text{in3},$$

$$\gamma_{\text{out}}(b) = \text{out1}, \gamma_{\text{out}}(c) = \text{out2}, \gamma_{\text{out}}(e) = \text{out3}$$
$$\text{con1}' = (b, d), \text{con2}' = (c, f).$$

Der über die Eingangsschnittstelle in1 führende, mit dem Eingangsfehlermodus a behaftete Signalpfad ist mit p1 bezeichnet, der über die Eingangsschnittstelle in2 führende, mit dem Eingangsfehlermodus d behaftete Signalpfad ist mit p2 bezeichnet, der über die Eingangsschnittstelle in3 führende, mit dem Eingangsfehlermodus f behaftete Signalpfad ist mit p3 bezeichnet. Wie aus vorstehender Beschreibung, vorstehenden Definitionen sowie Fig. 2 hervorgeht, sind die Komponentenfehlerpropagationsmodelle die Komponentenfehlerbäume wie zuvor beschrieben und das Fehlerpropagationsmodell des Systems S ist der Systemfehlerbaum. Der Systemfehlerbaum ist im gezeigten Ausführungsbeispiel aus sämtlichen Komponentenfehlerbäumen zusammengesetzt und über die jeweils in die einzelnen Sicherheitsanalysemodelle eingehenden Schnittstellen des Systemmodells mit dem Systemmodell selbst eng verbunden. Diese enge Kopplung von Systemmodell und Sicherheitsanalysemodell erlaubt eine flexible Anpassung des Sicherheitsanalysemodells an das jeweilige Systemmodell. Insbesondere ist eine gesonderte Erweiterung des Systemmodells nicht erforderlich um die relevanten Sicherheitsanalysemodelle buchzuhalten.

Um den Informationsfluss zwischen Systemmodell und Fehlerpropagationsmodell zu gewährleisten, können die Elemente dieser beiden Modelle automatisch miteinander in Beziehung gesetzt werden, indem eindeutige Bezeichner (beispielsweise eindeutige Namen der Elemente) gewählt werden. Hat beispielsweise eine Komponente einen eindeutigen Namen innerhalb des Systemmodells, so kann es innerhalb des Fehlerpropagationsmodells F anhand desselben Namens identifiziert werden. Folglich ist die Beziehung zwischen Elementen von Systemmodell und Fehlerpropagationsmodell F vollständig transparent. Allerdings muss bei der Systementwicklung gewährleistet werden, dass die Namen

der jeweiligen Modellelemente eindeutig sind. Für den Fall, dass dies nicht möglich ist, beinhaltet das vorliegende $S^2$AM-Modell eine Liste, welche die entsprechenden Verknüpfungen zwischen den Bezeichnern des Systemmodells und des Sicherheitsanalysemodells buchhält.

Zudem ist es möglich, die Konsistenz des Sicherheitsanalysemodells mit dem vorliegenden Systemmodell mittels des $S^2$AM - Ansatzes zu prüfen. Es kann geprüft werden ob

- für jede Komponente innerhalb des Systems ein Sicherheitsanalysemodell, also ein Komponentenfehlerpropagationsmodell, vorliegt,

$$\forall c_i \in C : \exists \, \text{SAM}_{c_i}$$

- alle Schnittstellen der sicherheitsrelevanten Komponenten des Systems im Fehlerpropagationsmodell ihren Niederschlag finden und ob jeweils einer Schnittstelle eine oder mehrere Fehlermodi zugeordnet sind

$$\forall^{\text{In}}_{P_i} \in P^{\text{In}} : \exists \, \text{fm}^{\text{In}} \in \text{SAM}_{\rho(p_i^{\text{In}})}$$

$$\forall^{\text{Out}}_{P_i} \in P^{\text{Out}} : \exists \, \text{fm}^{\text{Out}} \in \text{SAM}_{\rho(p_i^{\text{Out}})},$$

- alle Verknüpfungen zwischen Schnittstellen innerhalb des Systemmodells im Fehlerpropagationsmodell durch Verknüpfungen der Komponentenfehlerpropagationsmodelle ihren Niederschlag finden

$$\forall \, \text{con} \in \text{CON} : \exists \, \text{con}' \in \text{SAM}, \quad \text{und ob}$$

- die Verknüpfungen zwischen Schnittstellen innerhalb des Systemmodells konsistent sind mit Funktionen, die die Beziehung zwischen Ereignissen und Fehlermodi innerhalb des Fehlerpropagationsmodells beschreiben:

$$\forall \, \text{con} \in \text{CON mit} \left( p^{\text{out}}, p^{\text{in}} \right) : \exists \, \text{con}' \in \text{SAM} =$$

$$\left( \beta_{c_i} \right) \times \left( \text{FM}^{\text{In}}_{c_k} \in \text{SAM}_{\rho(p^{\text{in}})} \right)$$

$$\text{mit } c_i \neq c_k \in C.$$

Mithilfe dieser Konsistenzprüfung ist es möglich, Unstimmigkeiten zwischen Systemdesign und Fehlerpropagationsmodell zu erkennen. Folglich ist sichergestellt, dass Systemingenieure und Sicherheitsingenieure miteinander zeitnah und inhaltlich verzahnt zusammenarbeiten, da eine automatische Konsistenz zwischen den einzelnen Modellen notwendig gewährleistet ist.

Beispielsweise ermöglicht $S^2$AM$_{\text{EX}} \supset \{$SM$_{\text{EX}}$ U SAM$_{\text{Ex}}\}$ die nachfolgend genannten Konsistenzprüfungen des Sicherheitsanalysemodells SAM$_{\text{Ex}}$:

$$c1 \Rightarrow \text{SAM}_{c1}, \; c2 \Rightarrow \text{SAM}_{c2}, \; c3 \Rightarrow \text{SAM}_{c3}$$
$$\text{in}1 \Rightarrow a, \; \text{in}2 \Rightarrow d, \; \text{in}3 \Rightarrow f,$$
$$\text{out}1 \Rightarrow b, \; \text{out}2 \Rightarrow c, \; \text{out}3 \Rightarrow e$$
$$\text{con}1 \in SA_{Ex} \Rightarrow \text{con}1' \in \text{SAM}_{\text{Ex}}, \; \text{con}2 \in SA_{Ex} \Rightarrow \text{con}2' \in \text{SAM}_{\text{Ex}}.$$

Bei dem erfindungsgemäßen Verfahren zur Entwicklung des Systemmodells wird das Fehlerpropagationsmodell wie zuvor beschrieben mittels des erfindungsgemäßen Verfahrens zur Modellierung des Fehlerpropagationsmodells modelliert.

Insbesondere wird beim Systementwurf zeitnah und mit der Entwicklung iterativ das Fehlerpropagationsmodell des technischen Systems modelliert und anhand des Fehlerpropagationsmodells eine Sicherheitsanalyse durchgeführt.

**Patentansprüche**

1. Verfahren zur Modellierung eines Fehlerpropagationsmodells (F) eines mehrere Komponenten (c1, c2, c3) umfassenden technischen Systems (S), insbesondere eines Industrie-Automationssystems und/oder eines medizinischen Gerätesystems und/oder eines Transportsystems, bei welchem eine oder mehrere Schnittstellen (in1, out1, out2, in2, in3), mittels welchen die mehreren Komponenten (c1, c2, c3) miteinander in Signalverbindung stehen, herangezogen werden und wobei zumindest einer oder mehreren der Schnittstellen (in1, out1, out2, in2, in3) jeweils ein Fehlermodus zugeordnet wird, welcher in die Modellierung des Fehlerpropagationsmodells (F) einbezogen wird.

2. Verfahren nach Anspruch 1, bei welchem das Fehlerpropagationsmodell (F) einen Fehlerbaum umfasst.

3. Verfahren nach Anspruch 1 oder 2, bei welchem das Fehlerpropagationsmodell (F) zumindest ein Komponentenfehlerpropagationsmodell für zumindest eine Komponente des Systems (S) umfasst.

4. Verfahren nach dem vorhergehenden Anspruch, bei welchem das Komponentenfehlerpropagationsmodell einen Komponentenfehlerbaum und/oder eine Markovkette umfasst.

5. Verfahren nach einem der beiden vorhergehenden Ansprüche, bei welchem zumindest eine der Schnittstellen (in1, in3) eine Eingangsschnittstelle der zumindest einen Komponente (c1, c3) ist und das Komponentenfehlerpropagationsmodell dieser Komponente eine UND-Verknüpfung (&) eines über dieser Eingangsschnittstelle führenden Signalpfades (p1, p3) sowie eines weiteren Ereignisses (w, z) aufweist.

6. Verfahren nach einem der beiden vorhergehenden Ansprüche, bei welchem zumindest eine der Schnittstellen eine Eingangsschnittstelle der zumindest einen Komponente (c1, c2) ist und das Komponentenfehlerpropagationsmodell dieser Komponente eine ODER-Verknüpfung (v) eines über diese Eingangsschnittstelle führenden Signalpfades (p1, p2) sowie eines weiteren Ereignisses (x, y) aufweist.

7. Verfahren nach einem der vorhergehenden Ansprüche, welches für mehrere, insbesondere sämtliche, Komponenten (c1, c2, c3) des Systems (S) durchgeführt wird.

8. Verfahren nach einem der vorhergehenden Ansprüche, bei welchem sämtliche Schnittstellen (in1, out1, out2, in2, in3), mittels welchen die mehreren Komponenten (c1, c2, c3) miteinander in Verbindung stehen, herangezogen werden und jeder dieser Schnittstellen ein Fehlermodus (a, b, c, d, e, f, g) zugeordnet wird.

9. Computerprogrammprodukt, welches ausgebildet ist, ein Modell eines Systems mit mehreren Komponenten (c1, c2, c3), welche mittels einer oder mehrerer Schnittstellen (in1, out1, out2, in2, in3) miteinander in Signalverbindung stehen, entgegenzunehmen und anhand eines Verfahrens nach einem der vorhergehenden Ansprüche ein Fehlerpropagationsmodell (F) des Systems (S) bereitzustellen.

10. Verfahren zur Entwicklung eines mehrere Komponenten (c1, c2, c3) umfassenden technischen Systems (S), bei welchem ein Verfahren zur Modellierung eines Fehlerpropagationsmodells (F) des mehrere Komponenten (c1, c2, c3) umfassenden technischen Systems (S) nach einem der Ansprüche 1 bis 8 herangezogen wird, wobei vorzugsweise anhand des Fehlerpropagationsmodells (F) eine Sicherheitsanalyse des technischen Systems (S) durchgeführt wird.

## FIG 1

S

con1

in2   c2   out3

out1
in1   c1
out2

con2

in3   c3

## FIG 2

F

con1'

c2   p2   out3
in2   d   V   e
        y

c1   p1   w
        &   b   out1
in1   a
        x   V   c   out2

con2'

c3   p3
in3   f   &   g
        z

Europäisches
Patentamt

European
Patent Office

Office européen
des brevets

**EUROPÄISCHER RECHERCHENBERICHT**

Nummer der Anmeldung

EP 16 17 9950

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | YIANNIS PAPADOPOULOS ET AL: "A method and tool support for model-based semi-automated failure modes and effects analysis of engineering designs", ADVANCES IN ONTOLOGIES, AUSTRALIAN COMPUTER SOCIETY, INC, P.O. BOX 319 DARLINGHURST, NSW 2010 AUSTRALIA, 1. Oktober 2004 (2004-10-01), Seiten 89-95, XP058214498, ISSN: 1445-1336 ISBN: 978-1-920682-88-0 * das ganze Dokument * | 1-10 | INV. G05B23/02 |
| X | Bernhard Kaiser ET AL: "A New Component Concept for Fault Trees", 8th Australian Workshop on Safety Critical Systems and Software (SCS'03),, 1. Januar 2003 (2003-01-01), Seiten 37-46, XP055206337, Canberra Gefunden im Internet: URL:http://essarel.de/publications/klm03.pdf [gefunden am 2015-08-05] * das ganze Dokument * | 1-10 | |
| X | EP 2 876 519 A2 (BOEING CO [US]) 27. Mai 2015 (2015-05-27) * Zusammenfassung; Ansprüche 1, 8-14; Abbildungen 1, 4-8, 14 * * Absatz [0001] - Absatz [0016] * * Absatz [0037] - Absatz [0050] * * Absatz [0055] - Absatz [0059] * | 1-10 | RECHERCHIERTE SACHGEBIETE (IPC) G05B |

-/--

Der vorliegende Recherchenbericht wurde für alle Patentansprüche erstellt

| Recherchenort | Abschlußdatum der Recherche | Prüfer |
|---|---|---|
| Den Haag | 2. Dezember 2016 | Utz, Tilman |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 16 17 9950

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | JUNG JESSICA ET AL: "Experimental Comparison of Two Safety Analysis Methods and Its Replication", 2013 ACM / IEEE INTERNATIONAL SYMPOSIUM ON EMPIRICAL SOFTWARE ENGINEERING AND MEASUREMENT, IEEE, 10. Oktober 2013 (2013-10-10), Seiten 223-232, XP032530959, ISSN: 1938-6451, DOI: 10.1109/ESEM.2013.59 ISBN: 978-0-7695-5056-5 [gefunden am 2013-12-10] Section III; * Zusammenfassung; Abbildungen 1-4 * ----- | 1-10 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 2. Dezember 2016 | Utz, Tilman |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 17 9950

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-12-2016

| Im Recherchenbericht angeführtes Patentdokument | Datum der Veröffentlichung | Mitglied(er) der Patentfamilie | Datum der Veröffentlichung |
|---|---|---|---|
| EP 2876519 A2 | 27-05-2015 | AU 2014208308 A1<br>CA 2857923 A1<br>CN 104657536 A<br>EP 2876519 A2<br>JP 2015111402 A<br>US 2015142402 A1 | 04-06-2015<br>18-05-2015<br>27-05-2015<br>27-05-2015<br>18-06-2015<br>21-05-2015 |

EPO FORM P0461

Für nähere Einzelheiten zu diesem Anhang : siehe Amtsblatt des Europäischen Patentamts, Nr.12/82